(19) Europäisches Patentamt
European Patent Office
Office européen des brevets

(11) **EP 1 512 115 B1**

(12) **EUROPEAN PATENT SPECIFICATION**

(45) Date of publication and mention
of the grant of the patent:
**18.12.2013 Bulletin 2013/51**

(51) Int Cl.:
**H04N 7/34** *(2006.01)*   **H04N 7/26** *(2006.01)*

(21) Application number: **03732786.3**

(22) Date of filing: **10.06.2003**

(86) International application number:
**PCT/IB2003/002202**

(87) International publication number:
**WO 2003/105070 (18.12.2003 Gazette 2003/51)**

(54) **SPATIAL PREDICTION BASED INTRA CODING**

INTRACODIERUNG AUF DER BASIS RÄUMLICHER PRÄDIKTION

INTRACODAGE BASE SUR UNE PREDICTION SPATIALE

(84) Designated Contracting States:
**AT BE BG CH CY CZ DE DK EE ES FI FR GB GR HU IE IT LI LU MC NL PT RO SE SI SK TR**

(30) Priority: **11.06.2002 US 388061 P**
**12.06.2002 US 171467**
**21.06.2002 US 391112 P**
**09.07.2002 US 395178 P**

(43) Date of publication of application:
**09.03.2005 Bulletin 2005/10**

(73) Proprietor: **Nokia Corporation**
**02150 Espoo (FI)**

(72) Inventor: **KARCZEWICZ, Marta**
**Irving, TX 75038 (US)**

(74) Representative: **Schippan, Ralph**
**COHAUSZ & FLORACK**
**Patent- und Rechtsanwälte**
**Partnerschaftsgesellschaft**
**Bleichstrasse 14**
**40211 Düsseldorf (DE)**

(56) References cited:
**EP-A- 0 616 472    EP-A- 1 347 649**
**WO-A-01/54416**

- **BJONTEGAARD G (EDITOR): "H.26L TEST MODEL LONG TERM NUMBER 8 (TML-8) DRAFT0" ITU STUDY GROUP 16 - VIDEO CODING EXPERTS GROUP, XX, XX, vol. VCEG-M81, 2 April 2001 (2001-04-02), pages 1-2,16, XP002250455**
- **"WORKING DRAFT NUMBER 2, REVISION 0 (WD-2)" DOCUMENT JVT-B118, XX, XX, 3 December 2001 (2001-12-03), pages 1,03-100, XP001086632**
- **'ITU-telecommunication standardization sector' VIDEO CODING EXPERT GROUP (VCEG) September 2001, pages 1 - 10, XP002969249**
- **'Joint video team of ISO/IEC MPEG and ITU-T VCEG' DRAFT ISO/IEC 14496-10 February 2002, XP002969250**

**Description**

Field of the Invention

The present invention relates generally to image coding and, more particularly, to coding blocks of video frames.

Background of the Invention

A digital image, such as a video image, a TV image, a still image or an image generated by a video recorder or a computer, consists of pixels arranged in horizontal and vertical lines. The number of pixels in a single image is typically in the tens of thousands. Each pixel typically contains luminance and chrominance information. Without compression, the quantity of information to be conveyed from an image encoder to an image decoder is so enormous that it renders real-time image transmission impossible. To reduce the amount of information to be transmitted, a number of different compression methods, such as JPEG, MPEG and H.263 standards, have been developed. In a typical video encoder, the frame of the original video sequence is partitioned into rectangular regions or blocks, which are encoded in Intra-mode (I-mode) or Inter-mode (P-mode). The blocks are coded independently using some kind of transform coding, such as DCT coding. However, pure block-based coding only reduces the inter-pixel correlation within a particular block, without considering the inter-block correlation of pixels, and it still produces high bit-rates for transmission. Current digital image coding standards also exploit certain methods that reduce the correlation of pixel values between blocks.

In general, blocks encoded in P-mode are predicted from one of the previously coded and transmitted frames. The prediction information of a block is represented by a two-dimensional (2D) motion vector. For the blocks encoded in I-mode, the predicted block is formed using spatial prediction from already encoded neighboring blocks within the same frame. The prediction error, i.e., the difference between the block being encoded and the predicted block is represented as a set of weighted basis functions of some discrete transform. The transform is typically performed on an 8x8 or 4x4 block basis. The weights - transform coefficients - are subsequently quantized. Quantization introduces loss of information and, therefore, quantized coefficients have lower precision than the originals.

Quantized transform coefficients, together with motion vectors and some control information, form a complete coded sequence representation and are referred to as syntax elements. Prior to transmission from the encoder to the decoder, all syntax elements are entropy coded so as to further reduce the number of bits needed for their representation.

In the decoder, the block in the current frame is obtained by first constructing its prediction in the same manner as in the encoder and by adding to the prediction the compressed prediction error. The compressed prediction error is found by weighting the transform basis functions using the quantized coefficients. The difference between the reconstructed frame and the original frame is called reconstruction error.

The compression ratio, i.e., the ratio of the number of bits used to represent the original and compressed sequences, both in case of I- and P- blocks, is controlled by adjusting the value of the quantization parameter that is used to quantize transform coefficients. The compression ratio also depends on the employed method of entropy coding.

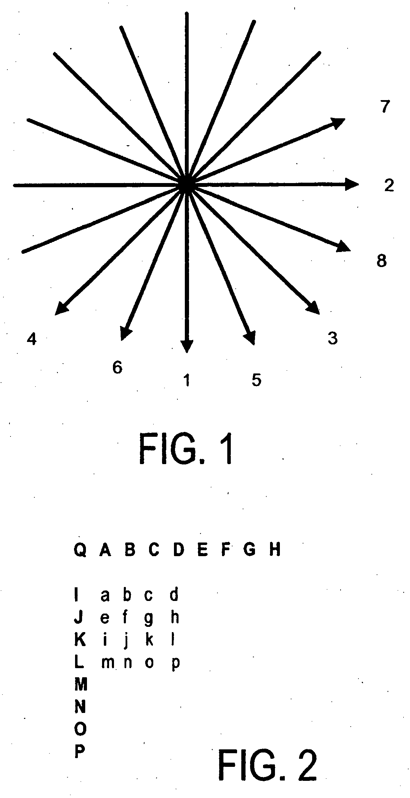

An example of spatial prediction used in a Working Draft Number 2 (WD2) of the JVT coder is described as follows. In order to perform the spatial prediction, the JVT coder offers 9 modes for prediction of 4x4 blocks, including DC prediction (Mode 0) and 8 directional modes, labeled 1 through 7, as shown in Figure 1. The prediction process is illustrated in Figure 2. As shown in Figure 2, the pixels from a to p are to be encoded, and pixels **A** to **Q** from neighboring blocks that have already been encoded are used for prediction. If, for example, Mode 1 is selected, then pixels a, e, i and m are predicted by setting them equal to pixel **A,** and pixels b, f, j and n are predicted by setting them equal to pixel **B,** etc. Similarly, if Mode 2 is selected, pixels a, b, c and d are predicted by setting them equal to pixel **I,** and pixels e, f, g and h are predicted by setting them equal to pixel **J,** etc. Thus, Mode 1 is a predictor in the vertical direction; and Mode 2 is a predictor in the horizontal direction. These modes are described in document VCEG-N54, published by ITU - Telecommunication Standardization Sector of Video Coding Expert Group (VCEG) in September 2001, and in document JVT-B118r2, published by the Joint Video Team of ISO/IEC MPEG and ITU-T VCEG in March, 2002.

Mode 0: DC prediction

Generally all samples are predicted by (A+B+C+D+I+J+K+L+4)>>3. If four of the samples are outside the picture, the average of the remaining four is used for prediction. If all eight samples are outside the picture the prediction for all samples in the block is 128. A block may therefore always be predicted in this mode

Mode 1: Vertical Prediction

If A, B, C, D are inside the picture, then

- a, e. i, m are predicted by A,
- b, f, j, n are predicted by B,
- c, g. k, o are predicted by C,
- d, h. 1, p are predicted by D.

Mode 2: Horizontal Prediction

If E, F, G, H are inside the picture, then

- a, b, c, d are predicted by E,
- e, f, g, h are predicted by F,
- i, j, k, l are predicted by G,
- m, n, o, p are predicted by H.

Mode 3: Diagonal Down/Right prediction

This mode is used only if all A, B, C, D, I, J, K, L, Q are inside the picture. This is a "diagonal" prediction.

- m is predicted by $(J + 2K + L + 2) >> 2$
- i, n are predicted by $(I + 2J + K + 2) >> 2$
- e, j, o are predicted by $(Q + 2I + J + 2) >> 2$
- a, f, k, p are predicted by $(A + 2Q + I + 2) >> 2$
- b, g, l are predicted by $(Q + 2A + B + 2) >> 2$
- c, h are predicted by $(A + 2B + C + 2) >> 2$
- d is predicted by $(B + 2C + D + 2) >> 2$.

Mode 4: Diagonal Down/Left prediction

This mode is used only if all A, B, C, D, I, J, K, L, Q are inside the picture. This is a "diagonal" prediction.

- a is predicted by $(A + 2B + C + I + 2J + K + 4) » 3$
- b, e are predicted by $(B + 2C + D + J + 2K + L + 4) >> 3$
- c, f, i are predicted by $(C + 2D + E + K + 2L + M + 4) >> 3$
- d, g, j, m are predicted by $(D + 2E + F + L + 2M + N + 4) >> 3$
- h, k, n are predicted $(E + 2F + G + M + 2N + O + 4) >> 3$
- l, o are predicted by $(F + 2G + H + N + 20 + P + 4) >> 3$
- p is predicted by $(G + H + O + P + 2) >> 3$

Mode 5: Vertical-Left prediction

This mode is used only if all A, B, C, D, I, J, K, L, Q are inside the picture. This is a "diagonal" prediction.

- a, j are predicted by $(Q + A + 1) >> 1$
- b, k are predicted by $(A + B + 1) >> 1$
- c, l are predicted by $(B + C + 1) >> 1$
- d is predicted by $(C + D + 1) >> 1$
- e, n are predicted by $(I + 2Q + A + 2) >> 2$
- f, o are predicted by $(Q + 2A + B + 2) >> 2$
- g, p are predicted by $(A + 2B + C + 2) >> 2$
- h is predicted by $(B + 2C + D + 2) >> 2$
- i is predicted by $(Q + 2I + J + 2) >> 2$
- m is predicted by $(I + 2J + K + 2) >> 2$

Mode 6: Vertical-Right prediction

This mode is used only if all A, B, C, D, I, J, K, L, Q are inside the picture. This is a "diagonal" prediction.

- a is predicted by $(2A + 2B + J + 2K + L + 4) >> 3$

- b, i are predicted by        (B + C + 1)>>1
- c, j are predicted by        (C + D + 1)>>1
- d, k are predicted by        (D + E + 1)>>1
- l is predicted by        (E + F + 1)>>1
- e is predicted by        (A + 2B + C + K + 2L + M + 4)>>3
- f, m are predicted by        (B + 2C + D + 2)>>2
- g, n are predicted by        (C + 2D + E + 2)>>2
- h, o are predicted by        (D + 2E + F + 2)>>2
- p is predicted by        (E + 2F + G + 2)>>2

Mode 7: Horizontal-Up prediction

This mode is used only if all A, B, C, D, I, J, K, L, Q are inside the picture. This is a "diagonal" prediction.

- a is predicted by        (B + 2C + D + 2I + 2J + 4)>>3
- b is predicted by        (C + 2D + E + I + 2J + K + 4)>>3
- c, e are predicted by        (D + 2E F + 2J + 2K + 4)>>3
- d, f are predicted by        (E + 2F + G + J + 2K + L + 4)>>3
- g, i are predicted by        (F + 2G + H + 2K + 2L + 4)>>3
- h, j are predicted by        (G + 3H + K + 3L + 4)>>3
- l, n are predicted by        (L + 2M + N + 2)>>3
- k, m are predicted by        (G + H + L + M + 2)>>2
- o is predicted by        (M + N + 1)>>1
- p is predicted by        (M + 2N + O + 2)>>2

Mode 8: Horizontal-Down prediction

This mode is used only if all A, B, C, D, I, J, K, L, Q are inside the picture. This is a "diagonal" prediction.

- a, g are predicted by        (Q + I + 1)>>1
- b, h are predicted by        (I + 2Q + A + 2)>>2
- c is predicted by        (Q + 2A + B + 2)>>2
- d is predicted by        (A + 2B + C + 2)>>2
- e, k are predicted by        (I + J + 1)>>1
- f, l are predicted by        (Q + 2I + J + 2)>>2
- i, o are predicted by        (J + K + 1)>>1
- j, p are predicted by        (I + 2J + K + 2)>>2
- m is predicted by        (K + L + 1)>>1
- n is predicted by        (J + 2K + L + 2)>>2

Since each block must have a prediction mode assigned and transmitted to the decoder, this would require a considerable number of bits if coded directly. In order to reduce the amount of information to be transmitted, the correlation of the prediction modes of adjacent blocks can be used. For example, Vahteri et al. (WO 01/54416 A1, "A Method for Encoding Images and An Image Coder", hereafter referred to as *Vahteri*) discloses a block-based coding method wherein directionality information of the image within the blocks are used to classify a plurality of spatial prediction modes. The spatial prediction mode of a block is determined by the directionality information of at least one neighboring block.

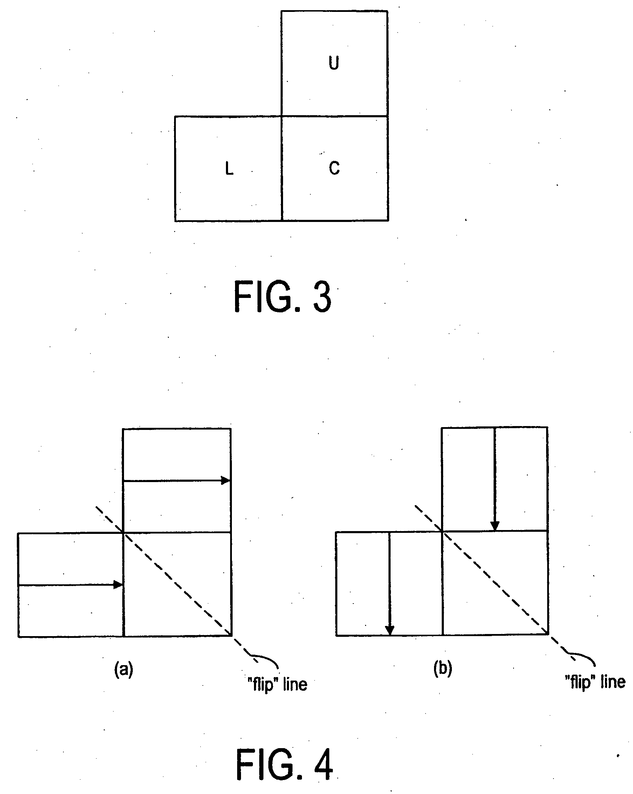

In JVT coder, when the prediction modes of neighboring, already-coded blocks **U** and **L** are known, an ordering of the most probable prediction mode, the next most probable prediction mode, etc., for block **C** is given (Figure 3). The ordering of modes is specified for each combination of prediction modes of **U** and **L.** This order can be specified as a list of prediction modes for block **C** ordered from the most to the least probable one. The ordered list used in the WD2 of the JVT coder, as disclosed in VCEG-N54, is given below:

TABLE I: Prediction mode as a function of ordering signalled in the bitstream

| L/U | outside | 0 | 1 | 2 | 3 |
|---|---|---|---|---|---|
| outside | -------- | 0-------- | 01------- | 10------- | --------- |
| 0 | 02------- | 021648573 | 125630487 | 021876543 | 021358647 |
| 1 | --------- | 102654387 | 162530487 | 120657483 | 102536487 |

(continued)

| L/U | outside | 0 | 1 | 2 | 3 |
|---|---|---|---|---|---|
| outside | -------- | 0-------- | 01------- | 10------- | --------- |
| 2 | 20------- | 280174365 | 217683504 | 287106435 | 281035764 |
| 3 | --------- | 201385476 | 125368470 | 208137546 | 325814670 |
| 4 | --------- | 201467835 | 162045873 | 204178635 | 420615837 |
| 5 | --------- | 015263847 | 152638407 | 201584673 | 531286407 |
| 6 | --------- | 016247583 | 160245738 | 206147853 | 160245837 |
| 7 | --------- | 270148635 | 217608543 | 278105463 | 270154863 |
| 8 | --------- | 280173456 | 127834560 | 287104365 | 283510764 |

| L/U | 4 | 5 | 6 | 7 | 8 |
|---|---|---|---|---|---|
| outside | -------- | --------- | --------- | --------- | --------- |
| 0 | 206147583 | 512368047 | 162054378 | 204761853 | 208134657 |
| 1 | 162045378 | 156320487 | 165423078 | 612047583 | 120685734 |
| 2 | 287640153 | 215368740 | 216748530 | 278016435 | 287103654 |
| 3 | 421068357 | 531268470 | 216584307 | 240831765 | 832510476 |
| 4 | 426015783 | 162458037 | 641205783 | 427061853 | 204851763 |
| 5 | 125063478 | 513620847 | 165230487 | 210856743 | 210853647 |
| 6 | 640127538 | 165204378 | 614027538 | 264170583 | 216084573 |
| 7 | 274601853 | 271650834 | 274615083 | 274086153 | 278406153 |
| 8 | 287461350 | 251368407 | 216847350 | 287410365 | 283074165 |

Here, an example of the prediction modes for the block C, as specified in the WD2 of the JVT coder, is given when the prediction mode for both U and L is 2. The string (2, 8, 7, 1, 0, 6, 4, 3, 5) indicates that mode 2 is also the most probable mode for block C. Mode 8 is the next most probable mode, etc. To the decoder the information will be transmitted indicating that the *nth* most probable mode will be used for block C. The ordering of the modes for block C can also be specified by listing the rank for each mode: the higher the rank, the less probable the prediction method. For the above example, the rank list would be (5, 4, 1, 8, 7, 9, 6, 3, 2). When the modes (0, 1, 2, 3, 4, 5, 6, 7, 8) are related to the rank list (5, 4, 1, 8, 7, 9, 6, 3, 2), we can tell that Mode 0 has a rank 5, Mode 1 has a rank 4, etc.

For more efficient coding, information on intra prediction of two 4x4 blocks can be coded in one codeword.

The above-mentioned method has one major drawback - the memory required to keep ordering of prediction modes for block **C** given prediction modes of blocks **U** and **L** is demanding. In WD2 of the JVT coder, because 9 modes are used for prediction, there are 9x9 possible combinations of modes for blocks **U** and **L.** For each combination, an ordering of 9 possible modes has to be specified. That means that 9x9x9 bytes (here it is assumed that one number requires one byte) are needed to specify the ordering of prediction modes. In addition, more memory may be required to specify the special cases - for example, if one or both blocks **U** and **L** are not available.

Thus, it is advantageous and desirable to provide a method and device for coding a digital image wherein the memory requirements are reduced while the loss in coding efficiency is minimal.

<u>Summary of the Invention</u>

A method and device for coding a digital image using intra-mode block prediction is provided. A list of prediction modes for each combination of prediction modes of the neighboring blocks is obtained. The modes assigned to each combination of prediction modes may be divided into two groups. The first group includes *m* (where *m* is smaller than the overall number *n* of available modes) most probable prediction modes and the second group includes the remaining modes. The modes in the first group are ordered according to their probability. This order may be specified as a list of modes ordered from most probable to the least probable mode. The modes belonging to the second group may be ordered in some predetermined manner, which may be specified depending on the information already available to the decoder. Information is sent to the decoder regarding whether the mode selected for a given block belongs to the first group or to the second group. If it belongs to the first group, the information is transmitted indicating that *i*th most probable mode shall be used for a block C given the combination of modes for blocks **U** and **L**. If the mode belongs to the second group, the information is transmitted indicating that jth mode of this group should be used.

The present invention will become apparent upon reading the description taken in conjunction with Figures 4a to 8.

Brief Description of the Drawings

Figure 1 is a schematic representation illustrating 8 directional modes that are used as spatial prediction modes.
Figure 2 is a schematic representation illustrating the pixels that are used for the prediction of a current 4x4 block of pixels.
Figure 3 is a schematic representation illustrating two neighboring blocks being used for the prediction of a current block.
Figure 4a is a schematic representation illustrating the spatial prediction mode of two neighboring blocks used for the prediction of a current block.
Figure 4b is a schematic representation illustrating the spatial prediction mode of two neighboring blocks having a mirrored relationship with those of Figure 4a.
Figure 5a is a schematic representation illustrating another spatial prediction mode pair.
Figure 5b is a schematic representation illustrating the mirrored mode pair.
Figure 6 is a flow-charting illustrating the method of spatial prediction.
Figure 7 is a block diagram illustrating a digital image block transfer system for implementing the method according to an embodiment of the present invention.
Figure 8 is a block diagram illustrating a portable video telecommunications device implementing the method according to an embodiment of the present invention.

Best Mode for Carrying Out the Invention

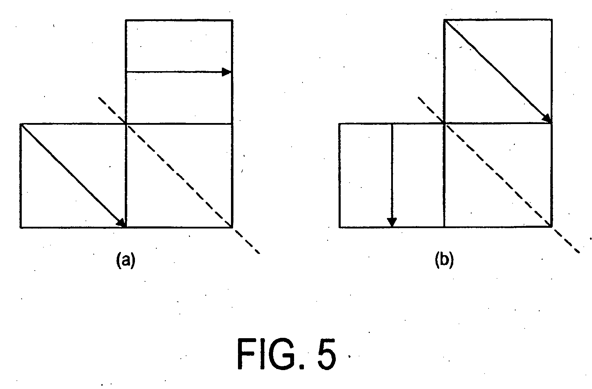

An embodiment of the present invention utilizes the property that it is possible to obtain an ordered list of prediction modes for one combination of prediction modes of neighboring blocks as a function of prediction modes for another combination. For illustration purposes, prediction modes of two neighboring blocks **U** and **L,** as shown in Figure 3, are used to infer the prediction of the current block **C.** It is noted that a combination of prediction modes in Figure 4a can be obtained by flipping diagonally the prediction modes, as shown in Figure 4b. Accordingly, the *nth* most probable prediction mode for block **C,** when the combination of modes in Figure 4a is used, should be the same as the "flipped diagonally", *nth*-most-probable prediction mode for the combination of modes in Figure 4b. Thus, if the neighboring blocks **U** and **L** have the modes "vertical" and "vertical", the prediction mode of the current block **C** is most probably "vertical" (Figure 4b). Consequently, when these blocks are "flipped" or mirrored against the diagonal ("down/right"), we know that from "horizontal" and "horizontal" we should get "horizontal" for the current block (Figure 4a). Similarly, if the neighboring blocks **U** and **L** are of Modes 2 and 3, as shown in Figure 5a, then the flipped blocks **U** and **L** will be of Modes 3 and 1, as shown in Figure 5b.

To further illustrate this example, let us define the function $f$ which maps the prediction direction $i$ into $j$, $j=f(i)$ as follows. Each prediction mode i is assigned a prediction mode $j$ obtained by mirroring it about the diagonal line going from upper left corner of the block to lower right corner of the block. For the prediction modes in Figure 1, the resulting assignment is summarized in Table II.

TABLE II

| i | j |
|---|---|
| 0 | 0 |
| 1 | 2 |
| 2 | 1 |
| 3 | 3 |
| 4 | 4 |
| 5 | 8 |
| 6 | 7 |
| 7 | 6 |
| 8 | 5 |

When the function is defined as above, the ordered list of prediction modes for the combination of modes *(k,*

*l)* can be determined based on the ordered list for combination *(i, j)* such that *i=f(l)* and *j=f(k)*, i.e., if the prediction mode *p* is the *nth* most probable mode for the combination *(i, j)*, the *nth* mode for the combination *(k, l)* is equal to *f(p)*. As an example let us consider the combination of modes (1,1) to which the ordered list of modes for block C is assigned: (1, 6, 2, 5, 3, 0, 4, 8, 7). It should be possible to obtain the ordered list of the prediction modes for combination (2,2) from this ordered list by mapping using the function f: (2, 7, 1, 8, 3, 0, 4, 6, 5). Similarly, the ordered list of the prediction modes for combination (2,3) is (2, 0, 8, 1, 3, 7, 5, 4, 6) and the ordered list of modes *f(2,3)=(3,1)* is *f(2, 0, 8, 1, 3, 7, 5, 4, 6) = (1, 0, 5, 2, 3, 6, 8, 4, 7)*. It should be noted that the ordered list of prediction modes for *(k,l)* can be substantially symmetrical to that for *(i,j)*. Thus, the mapping function *f* can be described as a mirroring function.

The primary objective of the present invention is to reduce the size of the table specifying prediction mode as a function of prediction modes of already coded, neighboring blocks (e.g., TABLE I). This table is obtained during the training process. To find the ordered list of prediction modes for combination of modes *(i,j)* for some large number of blocks **C** for which neighboring blocks have this combination, the number each prediction mode is chosen according to a given selection criterion (e.g., the smallest prediction error) is counted. This number determines the rank of prediction mode in the list of prediction modes assigned to combination *(i,j)*, more frequently the mode is chosen, higher the rank it has in the list of prediction modes.

When, during the training process the described mapping of the prediction modes is used, the resulting table specifying prediction modes will be smaller. If the ordered list for combination *(k,l)* can be obtained from ordered list for combination *(i,j)* only the ordered list for combination *(i,j)* has to be stored. During the training, the mapping can be introduced as follows. The frequency of occurrence of each prediction mode for the combinations *(k, l)* and *(i, j)* such that *i=f(l)* and *j=f(k)* is counted jointly, i.e., if prediction mode *p* was chosen for combination *(k,l)* it is also counted that prediction mode *f(p)* was chosen for combination *(i,j)*. As well when prediction mode *s* was chosen for combination *(i,j)* it is counted that prediction mode *f(s)* was chosen for combination *(k,l)*.

The reduced prediction table, according to the present invention, is shown in TABLE III.

TABLE III: Reduced Prediction Table

| L/U | outside | 0 | 1 | 2 | 3 |
|-----|---------|---|---|---|---|
| outside | -------- | 0-------- | 01------- | 10------- | -------- |
| 0 | 02------- | 024167835 | 150642387 | 027486135 | 013245867 |
| 1 | --------- | | 150643278 | 021468735 | 105436287 |
| 2 | 20------- | | 124086573 | | 283407156 |
| 3 | --------- | | | | 385240167 |
| 4 | --------- | | | | |
| 5 | --------- | | | | |
| 6 | --------- | | | | |
| 7 | --------- | | | | |
| 8 | --------- | | | | |

| L/U | 4 | 5 | 6 | 7 | 8 |
|-----|---|---|---|---|---|
| outside | -------- | -------- | -------- | --------- | --------- |
| 0 | 012465738 | 150346287 | 160452387 | 024716835 | 028413765 |
| 1 | 104562378 | 156403287 | 165403278 | 014652738 | 014256837 |
| 2 | 240781635 | 214835076 | 241086735 | 207483165 | 280473156 |
| 3 | 413205876 | 531480267 | 146530287 | 247308516 | 832045176 |
| 4 | 420671835 | 145602387 | 461027538 | 407261835 | 248073165 |
| 5 | | 513406287 | 165402387 | 240158376 | 082354167 |
| 6 | | 614503287 | 614057328 | 042617385 | 024681357 |
| 7 | | 427016385 | 426701835 | | 284703615 |
| 8 | | 328514067 | 248361075 | 248703651 | |

In TABLE III for some combinations (U, L), the ordered list of prediction modes is not given. The ordered lists for those combinations can be "restored" by mapping the corresponding elements that are retained in the prediction table when those "restored" elements are needed for the prediction of a current block. Thus, in general, as long as an element in the prediction table can be obtained or restored from another element in the prediction table by way of mapping, the former can be eliminated. In other words, in a prediction table comprising a first group of elements and a second group of elements, wherein each of the second group of elements can be restored from a corresponding element in the first group by a mapping function, the second group of elements can be eliminated.

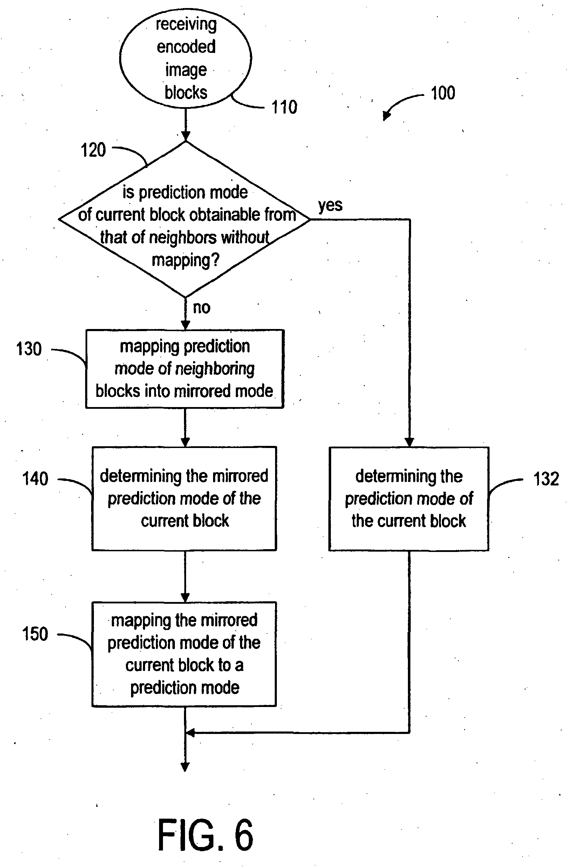

Figure 6 is a flowchart illustrating the decoding stage when the symmetry in the prediction table is utilized. As shown, the method **100** comprises receiving a plurality of image blocks at step **110**. When a current block is processed, it is determined at step **120** whether the prediction mode for the current block can be obtained from the prediction mode for the neighboring blocks without mapping. If so, then the spatial prediction mode of the current block is determined based on the prediction mode of the neighboring blocks at step **132**. Otherwise, a complementary prediction mode of the neighboring blocks is provided at step 130, and a complementary prediction mode of the current block is determined based on the complementary prediction mode of the neighboring blocks at step **140**. At step **150,** the complementary prediction mode of the current block is mapped into the prediction mode of the current block.

Alternatively, it is possible to assign the same label to different prediction modes (grouping them together) of blocks **U** and **L** before using them to specify the prediction mode for block C. For example, in the case of the JVT coder, modes 1, 5 and 6 can be grouped together and labeled as 1, and modes 2, 7 and 8 can be grouped together and labeled as 2. As can be seen from Figure 1, the directions of modes 7 and 8 are close to the direction of mode 2, and the directions of modes 5 and 6 are close to the direction of mode 1. After this grouping, each of blocks **U** and **L** can have one of the 5 modes labeled as 0, 1, 2, 3 and 4. Therefore, instead of 9x9 possible combinations of prediction modes of **U** and **L,** there are only 5x5 such combinations. Accordingly, the memory required to specify ordering of prediction modes for block **C,** given prediction modes of blocks **U** and **L,** will be 5x5x9 bytes, instead of 9x9x9 bytes (assuming that 1 byte of memory is required to hold 1 number). Furthermore, if the mapping function $f$ is used for "flipping" the ordered lists, the prediction table can be further simplified.

An example of the table specifying prediction mode as a function of ordering signaled in the bitstream when both of these methods are used in conjunction is given in TABLE IV.

TABLE IV

| L/U | outside | 0 | 1 | 2 | 3 | 4 |
|---|---|---|---|---|---|---|
| Outside | -------- | 0-------- | 01------- | 10------- | ------- | ------- |
| 0 | 02------- | 024167835 | 150642387 | 024781635 | 013245867 | 012465738 |
| 1 | --------- | | 156043278 | 021468375 | | 140652378 |
| 2 | 20------- | | 214806357 | | 283407156 | 247081635 |
| 3 | --------- | | | | 385240167 | 413205876 |
| 4 | --------- | | | | | 420671835 |

Moreover, it is also possible to limit the number of prediction modes for block **C** given prediction modes of blocks **U** and **L.** In the case of the JVT coder, there would still be 9x9 possible combination of prediction modes of **U** and **L.** But to each of these combinations only $m$ modes would be assigned, where $m$ is smaller than 9. Accordingly, the number of the probable prediction modes is reduced to (9x9x$m$)<(9x9x9). Similarly, if the mapping function $f$ is used for "flipping" the ordered lists, the prediction table can be further simplified.

These methods can be used jointly or separately.

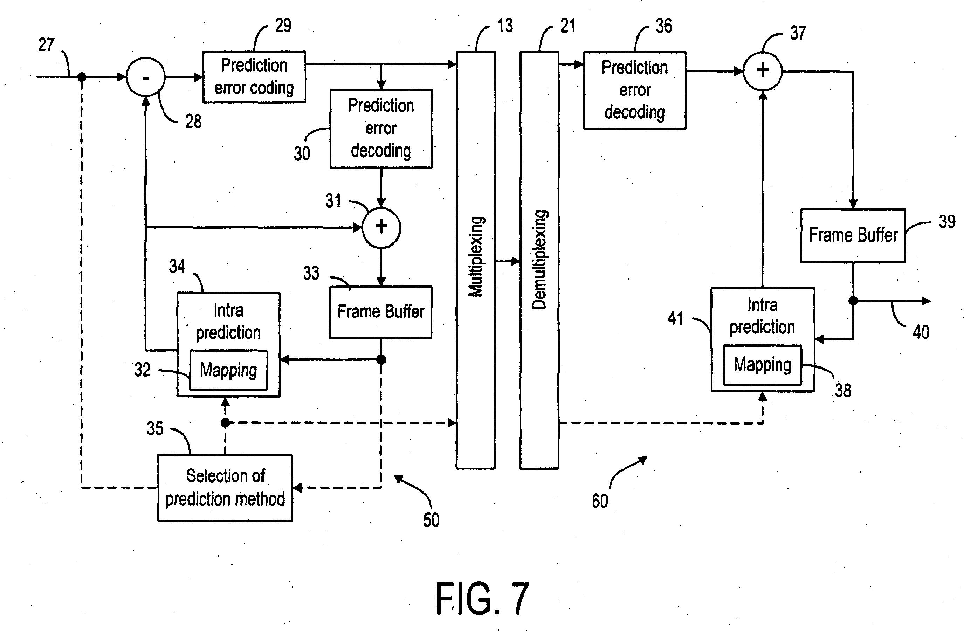

The spatial, prediction-based intra-coding, according to present invention, can be readily incorporated into a digital, image-block transfer system, as shown in Figure 7. Assuming that a frame is to be encoded in intra format using some form of intra prediction, encoding of the frame proceeds as follows. The blocks of the frame to be coded are directed one by one to the encoder **50** of the video transfer system presented in Figure 7. The blocks of the frame are received from a digital image source, e.g. a camera or a video recorder (not shown) at an input **27** of the image transfer system. In a manner known as such, the blocks received from the digital image source comprise image pixel values. The frame can be stored temporarily in a frame memory (not shown), or alternatively, the encoder receives the input data directly block by block.

The blocks are directed one by one to a prediction method selection block **35** that determines whether the pixel values of the current block to be encoded can be predicted on the basis of previously intra-coded blocks within the same frame or segment. In order to do this, the prediction method selection block **35** receives input from a frame buffer of the encoder **33,** which contains a record of previously encoded and subsequently decoded and reconstructed intra blocks. In this way, the prediction method selection block can determine whether prediction of the current block can be performed on the basis of previously decoded and reconstructed blocks. Furthermore, if appropriate decoded blocks are available, the prediction method selection block **35** can select the most appropriate method for predicting the pixel values of the current block, if more than one such method may be chosen. It should be appreciated that in certain cases, prediction of the current block is not possible because appropriate blocks for use in prediction are not available in the frame buffer **33.** In the situation where more than one prediction method is available, information about the chosen prediction method is supplied to multiplexer **13** for further transmission to the decoder. It should also be noted that in some prediction methods, certain parameters necessary to perform the prediction are transmitted to the decoder. This is, of course, dependent on the exact implementation adopted and in no way limits the application of the prediction-based intra coding according to the present invention.

Pixel values of the current block are predicted in the intra prediction block **34**. The intra prediction block **34** receives input concerning the chosen prediction method from the prediction method selection block **35** and information concerning the blocks available for use in prediction from frame buffer **33**. On the basis of this information, the intra prediction block **34** constructs a prediction for the current block. The predicted pixel values for the current block are sent to a differential summer **28** which produces a prediction error block by taking the difference between the pixel values of the predicted current block and the actual pixel values of the current block received from input **27.** Next, the error information for the predicted block is encoded in the prediction error coding block in an efficient form for transmission, for example using a discrete cosine transform (DCT). The encoded prediction error block is sent to multiplexer **13** for further transmission to the decoder. The encoder of the digital image transmission system also includes decoding functionality. The encoded prediction error of the current block is decoded in prediction error decoding block **30** and is subsequently summed in summer **31** with the predicted pixel values for the current block. In this way, a decoded version of the current block is obtained. The decoded current block is then directed to the frame buffer **33**.

Here, it is also assumed that the receiver receives the blocks that form a digital image frame one by one from a transmission channel.

In the receiver, **60,** a demultiplexer receives the demultiplexed coded prediction error blocks and prediction information transmitted from the encoder **50.** Depending on the prediction method in question, the prediction information may include parameters used in the prediction process. It should be appreciated that in the case that only one intra prediction method is used, information concerning the prediction method used to code the blocks is unnecessary, although it may still be necessary to transmit parameters used in the prediction process. In Figure 7, dotted lines are used to represent the optional transmission and reception of prediction method information and/or prediction parameters. Assuming more than one intra prediction method may be used, information concerning the choice of prediction method for the current block being decoded is provided to intra prediction block **41.** Intra prediction block **41** examines the contents of frame buffer **39** to determine if there exist previously decoded blocks to be used in the prediction of the pixel values of the current block. If such image blocks exist, intra prediction block **41** predicts the contents of the current block using the prediction method indicated by the received prediction method information and possible prediction-related parameters received from the encoder. Prediction error information associated with the current block is received by prediction error decoding block **36,** which decodes the prediction error block using an appropriate method. For example, if the prediction error information was encoded using a discrete cosine transform, the prediction error decoding block performs an inverse DCT to retrieve the error information. The prediction error information is then summed with the prediction for the current image block in summer **37** and the output of the summer is applied to the frame buffer **39**. Furthermore, as each block is decoded, it is directed to the output of the decoder **40,** for example, to be displayed on some form of display means. Alternatively, the image frame may be displayed only after the whole frame has been decoded and accumulated in the frame buffer **39.**

It should be noted that the intra-prediction block **34** constructs a prediction of the current block based on the previously encoded and subsequently decoded and reconstructed intra blocks as provided by the frame buffer **33**. In particular, the prediction of the current block is determined from the spatial prediction modes of the previously reconstructed intra blocks using a prediction table, as shown in TABLE III or TABLE IV (not shown in Figure 7). However, when the ordered list for the prediction modes $(i,j)$ of the previously reconstructed intra blocks are missing from the prediction table, a mapping block **32** can be used to map the spatial prediction modes of the previously reconstructed blocks into complementary or mirrored spatial prediction modes $(k,l)$. At this point, the intra prediction block **34** can determine the complementary or mirrored prediction mode $f(p)$ for the current block. Again the mapping block **32** is used to obtained the prediction mode p of the current block by mapping the complementary prediction mode $f(p)$. Likewise, a mapping block **38** is used for mapping when needed.

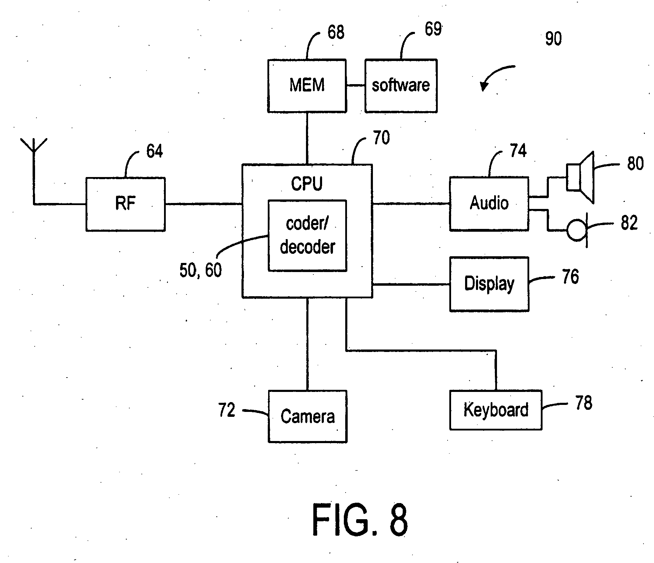

The mapping algorithm, which is used to perform the mapping of $(i,j)$ to $(k,l)$ and the mapping of $f(p)$ to $p$, can be coded in a software program **69,** which comprises machine executable steps or pseudo codes for performing the method according to the present invention. Advantageously, the software program is stored in a storage medium. For example, the software program is stored in a memory unit resident in a CPU **70,** or in a separate memory unit **68,** as shown in Figure 8. Figure 8 presents a simplified schematic diagram of a mobile terminal **90** intended for use as a portable video telecommunications device, incorporating the prediction mode mapping method of the present invention. The mobile terminal **90** comprises at least a display module **76** for displaying images, an image capturing device **72,** and an audio module **74** for capturing audio information from an audio input device **82** and reproducing audio information on an audio producing device **80.** Advantageously, the mobile terminal **90** further comprises a keyboard **78** for inputting data and commands, a radio frequency component **64** for communicating with a mobile telecommunications network and a signal/data processing unit 70 for controlling the operation of the telecommunications device. Preferably, the digital image block transfer system (**50, 60**) is implemented within in the processor **70.**

In accordance with a further embodiment of the present invention, memory requirements could be limited while achieving coding efficiency.

It has been observed that for each combination of modes for blocks **U** and **L** there are just a few modes for block **C** that have a high probability of occurrence. The probability of the remaining modes is much smaller. Moreover, probabilities of occurrence of these remaining modes are similar, and therefore, their order in the ordered set of modes does not have strong influence on the coding efficiency.

The modes assigned to each combination of prediction modes of **U** and **L** may be divided into two groups. The first group includes $m$ (where $m$ is smaller than the overall number $n$ of available modes) most probable prediction modes and the second group includes the remaining modes. The modes in the first group are ordered according to their probability. As described above, this order may be specified as a list of modes ordered from most probable to the least probable mode. The modes belonging to the second group may be ordered in some predetermined manner, which may be specified depending on the information already available to the decoder. For example, prediction mode that is labeled using smaller number may precede prediction mode that is labeled using larger number.

In other words the prediction modes are arranged into an ordered set S. The ordered set of modes $R$ assigned to combination of prediction modes for **U** and **L** is created by combining two ordered sets of modes $T=\{t_1, t_2, ..., t_k\}$ and $V=\{v_1, v_2, ..., v_1\}$:

$$R=\{t_1, t_2, ..., t_k, v_1, v_2, ..., v_1\}.$$

The modes in the first ordered set $T$ are ordered according to their expected probability of occurrence for combination of modes for neighboring blocks **U** and **L**. The more frequently the mode is expected to occur, the fewer bits should be used to signal it. The second ordered set of modes $V$ is created by removing elements of the first set $T$ from the set $S$ and preserving the order of the remaining elements. For example, if prediction $i$ preceded prediction mode $j$ in the ordered set $S$, prediction $i$ should precede prediction mode $j$ in the set $V$.

As an exemplar, let us consider modes available in the JVT coder and assume that for each combination of modes for blocks **U** and **L** only the most probable mode is assigned to the first group. The remaining 8 modes are listed in the ascending order of their number. To further illustrate this exemplar, let us consider the combination of modes (1,1) to which mode 1 is assigned as the most probable mode. Mode 1 constitutes the first ordered set $T$. The second ordered set $V$ is created by removing mode 1 from the ordered set $S$, i.e., $V = \{0, 2, 3, 4, 5, 6, 7, 8\}$. Here the ordered set $S$ is created by listing the nine prediction modes in ascending order of the numbers, i.e., $S =\{0, 1, 2, 3, 4, 5, 6, 7, 8\}$.

Information is sent to the decoder regarding whether the mode selected for a given block belongs to the first group or to the second group. If it belongs to the first group, the information is transmitted indicating that ith most probable mode shall be used for a block C given the combination of modes for blocks **U** and **L.** In our exemplar, if the decoder receives the information that first group is selected, no further information is required since only one mode belongs to this group. If the mode belongs to the second group, the information is transmitted indicating that $j$th mode of this group should be used. In our exemplar, if the information is received that the first mode should be selected, mode 0 should be chosen.

Implementation Alternatives:

1. The rules according to which the modes are ordered in set $S$ may differ.
2. The way that the elements of the first set $T$ are specified depends on the prediction modes of neighboring blocks **U** and **L.** The elements of this set can be specified for example as a table stored in the memory both of the encoder and decoder, or they can be inferred from the modes **U** and **L** themselves.
3. The signaling to the decoder of which mode is selected can be done in numerous ways, for example:

- The information about the rank of the prediction mode in the ordered set $R$ can be transmitted.
- The information regarding which set $T$ or $V$ is selected is followed by the rank of the mode in the selected set.

Preferred implementation for the prediction modes specified in the JVT coder is described as follows.

The same label may be assigned to different prediction modes of blocks **U** and **L** before using them to specify prediction mode for block C. Diagonal modes 3, 5 and 8 are grouped together and labeled as 3, and diagonal modes 4, 6 and 7 are grouped together and labeled as 4. After this grouping, each of blocks **U** and **L** may have one of the 5 modes labeled as 0, 1, 2, 3 and 4. Therefore, instead of 9x9 possible combination of prediction modes of **U** and **L** there are only 5x5 such combinations.

The ordered set *S* is created by listing the nine prediction modes in ascending order of their number, i.e., *S*= {0, 1, 2, 3, 4, 5, 6, 7, 8}. To each combination of prediction modes for **U** and **L,** only one most probable mode is assigned, i.e., the ordered set *T* for each combination consists of only one element. The assignment is given in Table V.

TABLE V

| L/U | outside | 0 | 1 | 2 | 3 | 4 |
|---|---|---|---|---|---|---|
| outside | 0 | 0 | 1 | | | |
| 0 | 0 | 0 | 1 | 0 | 0 | 0 |
| 1 | | 0 | 1 | 0 | 1 | 1 |
| 2 | 2 | 2 | 1 | 2 | 2 | 2 |
| 3 | | 0 | 1 | 2 | 3 | 4 |
| 4 | | 0 | 1 | 2 | 4 | 4 |

First information is sent to the decoder whether the most probable mode is used. This information is coded jointly for two 4x4 blocks as given in table below.

TABLE VI

| Codeword | Block 1 | Block 2 |
|---|---|---|
| 0 | x | x |
| 10 | | |
| 110 | x | |
| 111 | | x |

X denotes that the most probable mode should be used. For the blocks for which the most probable mode *m* is not used, the code number from 0 to 7 is transmitted indicating which of the remaining modes should be used. Since the remaining modes are ordered according to their number, the mode with a smaller number precedes the mode with a higher number, when the code number *q* is received, the used prediction mode is equal to:

*q,* if *q<m*
*q*+1, otherwise.

The code number *q* is sent as 3-bit codeword, which is the binary representation of the corresponding code number.

The savings in memory for the method, according to the present invention, comes from the fact that the decoder for each combination of modes of blocks **U** and **L** must store, at most, the ordered sets *S* and *T*, while *S* is identical for all the combination of modes for blocks **U** and **L.**

In sum, the present invention provides methods, devices and systems for coding into a bitstream and decoding from the bitstream image information comprising a plurality of image blocks using a plurality of spatial prediction modes for intra-mode block prediction. The spatial prediction mode of a current block (C) can be determined based on a plurality of derived prediction modes, derived from the spatial prediction modes of a plurality of neighboring blocks (U, L) of the current block (C). The plurality of *n* derived prediction modes are grouped into a first group of *m* first prediction modes with *m<n* and a second group of second prediction modes. The first prediction modes have a higher probability of occurrence than the second prediction modes. While the first prediction modes are ordered according to their probability of occurrence, the second prediction modes are arranged in a predetermined fashion known to the decoder. Thus, an ordered set is provided to the decoding device so as to allow the decoding device to determine the order of the second prediction modes based on the provided ordered set. The ordered set is associated with one or more group of the spatial prediction modes of the neighboring blocks (U, L) of the current block (C). Furthermore, the bitstream may include coded information indicative of which of the first prediction modes has the highest probability of occurrence when the derived prediction mode with the highest probability of occurrence is selected for use in coding the current block (C). The present invention also provides a computer program having pseudo codes for use in grouping the plurality of derived prediction modes into the first and second groups, and in ordering the first prediction modes according to the probability of occurrence among the first prediction modes.

Although the invention has been described with respect to a preferred embodiment thereof, it will be understood by those skilled in the art that the foregoing and various other changes, omissions and deviations in the form and detail thereof may be made without departing from the scope of this invention.

**Claims**

1. A method of coding into a bitstream image information comprising a plurality of image blocks using a plurality of spatial prediction modes for intra-mode block prediction, wherein the spatial prediction mode of a current block is determined based on a list of available prediction modes obtained for the combination of spatial prediction modes of a plurality of neighboring blocks of the current block, said method **characterized by** comprising
dividing the prediction modes of the list of prediction modes obtained for the combination of spatial prediction modes of the plurality of neighboring blocks of the current block into a first group and a second group of prediction modes, the first group of prediction modes having m prediction modes and the second group of prediction modes having n-m prediction modes, wherein n is the overall number of prediction modes of the list of prediction modes for the combination of spatial prediction modes of the plurality of neighboring blocks of the current block, m is smaller than n, and wherein the prediction modes of the first group of prediction modes have a higher probability of occurrence than the prediction modes of the second group of prediction modes, and
coding into the bitstream information indicative of whether the spatial prediction mode of the current block belongs to the first group or the second group of prediction modes.

2. The method of claim 1, further **characterized by**
ordering the prediction modes of the first group of prediction modes according to the probability of occurrence among the prediction modes of the first group of prediction modes.

3. The method of claim 1, further **characterized by**
arranging the predictions modes of the second group of prediction modes in a predetermined fashion known to a decoding device.

4. The method of claim 1, further **characterized by**
coding into the bitstream information indicative of which prediction mode of the first group of prediction modes has a highest probability of occurrence when the prediction mode with the highest probability of occurrence from the first group of prediction mode is selected for use in coding the current block.

5. The method of claim 1, further **characterized in that** an ordered list of prediction modes is known to a decoding device so that the decoding device determines an order of the second group of prediction modes based on the ordered list of prediction modes.

6. The method of claim 5, further **characterized in that** the ordered list of prediction modes is associated with more than one group of the spatial prediction modes of a plurality of neighboring blocks of the current block.

7. The method of claim 1, further **characterized in that** the prediction modes of the list of prediction modes obtained for the combination of spatial prediction modes of the plurality of neighboring blocks of the current block are represented by a plurality of different integers and the prediction modes of the second group of prediction modes are ordered according to an order of the integers known to a decoding device.

8. The method of claim 1, wherein the prediction modes of the list of prediction modes obtained for the combination of spatial prediction modes of the plurality of neighboring blocks of the current block are represented by a plurality of different integers, each integer corresponding to a prediction mode, and wherein the integers are arranged in an ascending order of the integers for providing an ordered list of prediction modes, said method comprising
removing the integers corresponding to the first group of prediction modes from the ordered list for providing a modified ordered list, so as to allow a decoding device to determine the order of the second group of prediction modes based on the modified ordered list.

9. The method of claim 5, wherein one prediction mode of said list of prediction modes obtained for the combination of spatial prediction modes of the plurality of neighboring blocks of the current block is selected for use in coding the current block, said method further **characterized by**

providing the decoding device with information indicative of a rank of the selected prediction mode among the prediction modes of the second group of prediction modes if the selected prediction mode is in the second group of prediction modes.

10. The method of claim 1, further **characterized by**

mapping the spatial prediction modes of the neighboring blocks for providing complementary prediction modes of the neighboring blocks when needed, to

determine a complementary prediction mode of the current block based on the complementary prediction modes of the neighboring blocks, and by

mapping the complementary prediction mode of the current block for obtaining the spatial prediction mode of the current block.

11. The method of claim 10, **characterized in that**

the mapping of a prediction mode of a block is carried out by a mirroring function.

12. An encoding device for coding into a bitstream an image comprising a plurality of image blocks using a plurality of spatial prediction modes for intra-mode block prediction, wherein the spatial prediction mode of a current block is determined based on a list of available prediction modes obtained for the combination of spatial prediction modes of a plurality of neighboring blocks of the current block, said encoding device **characterized by** comprising

means for dividing the prediction modes of the list of prediction modes obtained for the combination of spatial prediction modes of the plurality of neighboring blocks of the current block into a first group and a second group of prediction modes, the first group of prediction modes having m prediction modes and the second group of prediction modes having n-m prediction modes, wherein n is the overall number of prediction modes of the list of prediction modes for the combination of spatial prediction modes of the plurality of neighboring blocks of the current block, m is smaller than n, and wherein the prediction modes of the first group of prediction modes have a higher probability of occurrence than the prediction modes of the second group of prediction modes, and

means for coding into the bitstream information indicative of whether the spatial prediction mode of the current block belongs to the first group or the second group of prediction modes.

13. The encoding device of claim 12, further **characterized by**

means, responsive to the first group of prediction modes, for ordering the prediction modes of the first group of prediction modes according to the probability of occurrence among the prediction modes of the first group of prediction modes for providing an ordered list.

14. The encoding device of claim 12, further **characterized by**

means for providing to a decoding device information indicative of the prediction mode in the list that has a highest probability of occurrence.

15. The encoding device of claim 12, further **characterized by**

means capable of providing complementary prediction modes of the neighboring blocks when needed based on the spatial prediction modes of the neighboring blocks so that a complementary prediction mode of the current block can be determined based on the complementary prediction modes of the neighboring blocks, and

means, responsive to the complementary prediction mode of the current block, for providing the spatial prediction mode of the current block based on a mapping of the complementary prediction mode of the current block.

16. A method for decoding from a bitstream image information comprising a plurality of image blocks using a plurality of spatial prediction modes for intra-mode block prediction, wherein the spatial prediction mode of a current block is determined based on a list of available prediction modes obtained for the combination of the spatial prediction modes of a plurality of neighboring blocks of the current block, said method **characterized by** comprising

dividing the prediction modes of the list of prediction modes obtained for the combination of spatial prediction modes of the plurality of neighboring blocks of the current block into a first group and a second group of prediction modes, the first group of prediction modes having m prediction modes and the second group of prediction modes having n-m prediction modes, wherein n is the overall number of prediction modes of the list of prediction modes for the combination of spatial prediction modes of the plurality of neighboring blocks of the current block, m is smaller than n, and wherein the prediction modes of the first group of prediction modes have a higher probability of occurrence than the prediction modes of the second group of prediction modes, said method **characterized by**

decoding from the bitstream information indicative of whether the spatial prediction mode of the current block belongs to the first group or the second group of prediction modes.

17. The method of claim 16, further **characterized in that** the prediction modes of the first group of prediction modes are ordered according to the probability of occurrence among the prediction modes of the first group of prediction modes.

18. The method of claim 16, further **characterized in that** the prediction modes of the second group of prediction modes are arranged in a predetermined fashion known to a decoding device.

19. The method of claim 16, further **characterized in that** the decoded information is also indicative of which prediction mode of the first prediction modes has a highest probability of occurrence when the prediction mode with the highest probability of occurrence of first group of prediction modes is selected for use in coding and decoding the current block.

20. The method of claim 16, further **characterized in that** an ordered list is provided to a decoding device so as to allow the decoding device to determine an order of the prediction modes of the second group of prediction modes based on the ordered list.

21. A decoder capable of decoding from a bitstream image information comprising a plurality of image blocks using a plurality of spatial prediction modes for intra-mode block prediction, wherein the spatial prediction mode of a current block is determined based on a list of available prediction modes obtained for the combination of the spatial prediction modes of a plurality of neighboring blocks of the current block, said decoder **characterized in that**
the prediction modes of the list of prediction modes obtained for the combination of spatial prediction modes of the plurality of neighboring blocks of the current block are divided into a first group and a second group of prediction modes, the first group of prediction modes having m prediction modes and the second group of prediction modes having n-m prediction modes, wherein n is the overall number of prediction modes of the list of prediction modes for the combination of spatial prediction modes of the plurality of neighboring blocks of the current block m is smaller than n, and wherein the prediction modes of the first group of prediction modes have a higher probability of occurrence than the prediction modes of the second group of prediction modes, said decoder comprising
determining means, responsive to decoded information, for determining whether the spatial prediction mode of the current block belongs to the first group or the second group of prediction modes, and
means for selecting the spatial prediction mode based on said determining.

22. The decoder of claim 21, further **characterized in that** the prediction modes of the first group of prediction modes are ordered according to the probability of occurrence among the prediction modes of the first group of prediction modes.

23. The decoder of claim 21, further **characterized in that** the prediction modes of the second group of prediction modes are arranged in a predetermined fashion, said decoder further **characterized by**
means for storing information indicative to said predetermined fashion.

24. The decoder of claim 21, further **characterized in that** said determining means is also capable of determining based on the decoded information which of the prediction modes of the first group of prediction modes has a highest probability of occurrence when the prediction mode with the highest probability of occurrence of the first group of prediction modes is selected for use in decoding the current block.

25. An image coding system for coding and decoding an image comprising a plurality of image blocks using a plurality of spatial prediction modes for intra-mode block prediction, wherein the spatial prediction mode of a current block is determined based on a list of available prediction modes obtained for the combination of the prediction modes of a plurality of neighboring blocks of the current block, said coding system **characterized by** comprising
means for dividing the prediction modes of the list of prediction modes obtained for the combination of spatial prediction modes of the plurality of neighboring blocks of the current block into a first group and a second group of prediction modes, the first group of prediction modes having m prediction modes and the second group of prediction modes having n-m prediction modes, wherein n is the overall number of prediction modes of the list of prediction modes for the combination of spatial prediction modes of the plurality of neighboring blocks of the current block, m is smaller than n, and wherein the prediction modes of the first group of prediction modes have a higher probability of occurrence than the prediction modes of the second group of prediction modes,
means, for coding into a bitstream group information indicative of whether the spatial prediction mode of the current block belongs to the first group or the second group of prediction modes, and
means, for decoding from the bitstream said group information so as to allow a decoding device to determine the spatial prediction mode of the current block based on said decoded information.

26. The image coding system of claim 25, further **characterized by**
means, responsive to the first group of prediction modes, for ordering the prediction modes of the first group of prediction modes according to the probability of occurrence among the prediction modes of the group the first group of prediction modes.

27. The image coding system of claim 25, further **characterized by**
means, responsive to the second group of prediction modes, for arranging the prediction modes of the second group of prediction modes in a predetermined fashion known to the decoding device.

28. A computer program for use in an image coding system for coding into a bitstream image information comprising a plurality of image blocks using a plurality of spatial prediction modes for intra-mode block prediction, wherein the spatial prediction mode of a current block is determined based on a list available of prediction modes which is obtained for a combination of spatial prediction modes of a plurality of neighboring blocks of the block, said computer program comprising
a pseudo code for use in dividing the prediction modes of the list of prediction modes obtained for the combination of spatial prediction modes of the plurality of neighboring blocks of the current block into a first group and a second group of prediction modes, the first group of prediction modes having m prediction modes and the second group of prediction modes having n-m prediction modes, wherein n is the overall number of prediction modes of the list of prediction modes for the combination of spatial prediction modes of the plurality of neighboring blocks of the current block m is smaller than n, and wherein the prediction modes of the first group of prediction modes have a higher probability of occurrence than the prediction modes of the second group of prediction modes, and
a pseudo code for use in coding into the bitstream information indicative of whether the spatial prediction mode of the current block belongs to the first group or the second group of prediction modes.

29. The computer program of claim 28, further **characterized by**
a pseudo code for use in arranging the prediction modes of the second group of prediction modes in a predetermined fashion known to a decoding device.

**Patentansprüche**

1. Verfahren zum Codieren von Bildinformationen, die mehrere Bildblöcke enthalten, in einen Bitstrom unter Verwendung mehrerer Modi für räumliche Prädiktion für eine Intramodus-Blockprädiktion, wobei der Modus für räumliche Prädiktion eines momentanen Blocks anhand einer Liste verfügbarer Prädiktionsmodi bestimmt wird, die aus der Kombination der Modi für räumliche Prädiktion mehrerer benachbarter Blöcke des momentanen Blocks erhalten werden, wobei das Verfahren **dadurch gekennzeichnet ist, dass** es Folgendes umfasst:

Unterteilen der Prädiktionsmodi der Liste von Prädiktionsmodi, die für die Kombination von Modi für räumliche Prädiktion der mehreren benachbarten Blöcke des momentanen Blocks erhalten werden, in eine erste Gruppe und eine zweite Gruppe von Prädiktionsmodi, wobei die erste Gruppe von Prädiktionsmodi m Prädiktionsmodi besitzt und die zweite Gruppe von Prädiktionsmodi n - m Prädiktionsmodi besitzt, wobei n die Gesamtanzahl von Prädiktionsmodi der Liste von Prädiktionsmodi für die Kombination von Modi für räumliche Prädiktion der mehreren benachbarten Blöcke des momentanen Blocks ist, wobei m kleiner ist als n und wobei die Prädiktionsmodi der ersten Gruppe von Prädiktionsmodi eine größere Auftrittswahrscheinlichkeit haben als die Prädiktionsmodi der zweiten Gruppe von Prädiktionsmodi, und
Codieren von Informationen, die angeben, ob der Modus für räumliche Prädiktion des momentanen Blocks zu der ersten Gruppe oder zu der zweiten Gruppe von Prädiktionsmodi gehört, in den Bitstrom.

2. Verfahren nach Anspruch 1, ferner **gekennzeichnet durch**
Ordnen der Prädiktionsmodi der ersten Gruppe von Prädiktionsmodi in Übereinstimmung mit der Auftrittswahrscheinlichkeit unter den Prädiktionsmodi der ersten Gruppe von Prädiktionsmodi.

3. Verfahren nach Anspruch 1, ferner **gekennzeichnet durch**
Anordnen der Prädiktionsmodi der zweiten Gruppe von Prädiktionsmodi auf eine vorgegebene Weise, die einer Decodierungsvorrichtung bekannt ist.

4. Verfahren nach Anspruch 1, ferner **gekennzeichnet durch**
Codieren von Informationen, die angeben, welcher Prädiktionsmodus der ersten Gruppe von Prädiktionsmodi die höchste Auftrittswahrscheinlichkeit hat, in den Bitstrom, wenn der Prädiktionsmodus mit der höchsten Auftrittswahrscheinlichkeit aus der ersten Gruppe von Prädiktionsmodi für die Verwendung bei der Codierung des momentanen Blocks ausgewählt wird.

5. Verfahren nach Anspruch 1, ferner **dadurch gekennzeichnet, dass** eine geordnete Liste von Prädiktionsmodi einer Decodierungsvorrichtung bekannt ist, so dass die Decodierungsvorrichtung eine Reihenfolge der zweiten Gruppe von Prädiktionsmodi anhand der geordneten Liste von Prädiktionsmodi bestimmt.

6. Verfahren nach Anspruch 5, ferner **dadurch gekennzeichnet, dass** der geordneten Liste von Prädiktionsmodi mehr als eine Gruppe der Modi für räumliche Prädiktion mehrerer benachbarter Blöcke des momentanen Blocks zugeordnet sind.

7. Verfahren nach Anspruch 1, ferner **dadurch gekennzeichnet, dass** die Prädiktionsmodi der Liste von Prädiktionsmodi, die für die Kombination von Modi für räumliche Prädiktion der mehreren benachbarten Blöcke des momentanen Blocks erhalten werden, durch mehrere verschiedene ganze Zahlen repräsentiert werden und die Prädiktionsmodi der zweiten Gruppe von Prädiktionsmodi in Übereinstimmung mit einer Reihenfolge der ganzen Zahlen, die einer Decodierungsvorrichtung bekannt ist, geordnet werden.

8. Verfahren nach Anspruch 1, wobei die Prädiktionsmodi der Liste von Prädiktionsmodi, die für die Kombination für Modi für räumliche Prädiktion der mehreren benachbarten Blöcke des momentanen Blocks erhalten werden, durch mehrere verschiedene ganze Zahlen repräsentiert werden, wobei jede ganze Zahl einem Prädiktionsmodus entspricht und wobei die ganzen Zahlen in einer ansteigenden Reihenfolge der ganzen Zahlen angeordnet sind, um eine geordnete Liste von Prädiktionsmodi bereitzustellen, wobei das Verfahren Folgendes umfasst:

Entfernen der ganzen Zahlen, die der ersten Gruppe von Prädiktionsmodi entsprechen, aus der geordneten Liste, um eine modifizierte geordnete Liste bereitzustellen, um so einer Decodierungsvorrichtung zu erlauben, die Reihenfolge der zweiten Gruppe von Prädiktionsmodi anhand der modifizierten geordneten Liste zu bestimmen.

9. Verfahren nach Anspruch 5, wobei ein Prädiktionsmodus der Liste von Prädiktionsmodi, die für die Kombination von räumlichen Prädiktionsmodi der mehreren benachbarten Blöcke des momentanen Blocks erhalten werden, für die Verwendung bei der Codierung des momentanen Blocks ausgewählt wird, wobei das Verfahren ferner **gekennzeichnet ist durch**:

Bereitstellen von Informationen, die einen Rang des ausgewählten Prädiktionsmodus unter den Prädiktionsmodi der zweiten Gruppe von Prädiktionsmodi angeben, für die Decodierungsvorrichtung, falls sich der ausgewählte Prädiktionsmodus in der zweiten Gruppe von Prädiktionsmodi befindet.

10. Verfahren nach Anspruch 1, ferner **gekennzeichnet durch**
Abbilden der räumlichen Prädiktionsmodi der benachbarten Blöcke, um komplementäre Prädiktionsmodi der benachbarten Blöcke bereitzustellen, wenn sie gebraucht werden, um
einen komplementären Prädiktionsmodus des momentanen Blocks anhand der komplementären Prädiktionsmodi der benachbarten Blöcke zu bestimmen, und **durch**
Abbilden des komplementären Prädiktionsmodus des momentanen Blocks, um den Modus für räumliche Prädiktion des momentanen Blocks zu erhalten.

11. Verfahren nach Anspruch 10, **dadurch gekennzeichnet, dass**
das Abbilden eines Prädiktionsmodus eines Blocks durch eine Spiegelungsfunktion ausgeführt wird.

12. Codierungsvorrichtung zum Codieren eines Bildes, das mehrere Bildblöcke besitzt, in einen Bitstrom unter Verwendung mehrerer Modi für räumliche Prädiktion für eine Intramodus-Blockprädiktion, wobei der Modus für räumliche Prädiktion eines momentanen Blocks anhand einer Liste verfügbarer Prädiktionsmodi bestimmt wird, die für die Kombination der Modi für räumliche Prädiktion mehrerer benachbarter Blöcke des momentanen Blocks erhalten werden, wobei die Codierungsvorrichtung **dadurch gekennzeichnet ist, dass** sie Folgendes umfasst:

Mittel zum Unterteilen der Prädiktionsmodi der Liste von Prädiktionsmodi, die für die Kombination von Modi für räumliche Prädiktion der mehreren benachbarten Blöcke des momentanen Blocks erhalten werden, in eine erste Gruppe und eine zweite Gruppe von Prädiktionsmodi, wobei die erste Gruppe von Prädiktionsmodi m Prädiktionsmodi besitzt und die zweite Gruppe von Prädiktionsmodi n - m Prädiktionsmodi besitzt, wobei n die Gesamtanzahl von Prädiktionsmodi der Liste von Prädiktionsmodi für die Kombination für Modi für die räumliche Prädiktion der mehreren benachbarten Blöcke des momentanen Blocks ist, wobei m kleiner n ist und wobei die Prädiktionsmodi der ersten Gruppe von Prädiktionsmodi eine höhere Auftrittswahrscheinlichkeit haben als die Prädiktionsmodi der zweiten Gruppe von Prädiktionsmodi, und

Mittel zum Codieren von Informationen, die angeben, ob der Modus für räumliche Prädiktion des momentanen Blocks zu der ersten Gruppe oder zu der zweiten Gruppe von Prädiktionsmodi gehört, in den Bitstrom.

**13.** Codierungsvorrichtung nach Anspruch 12, ferner **gekennzeichnet durch**

Mittel, um in Ansprechen auf die erste Gruppe von Prädiktionsmodi die Prädiktionsmodi der ersten Gruppe von Prädiktionsmodi in Übereinstimmung mit der Auftrittswahrscheinlichkeit unter den Prädiktionsmodi der ersten Gruppe von Prädiktionsmodi zu ordnen, um eine geordnete Liste bereitzustellen.

**14.** Codierungsvorrichtung nach Anspruch 12, ferner **gekennzeichnet durch**

Mittel zum Bereitstellen von Informationen, die den Prädiktionsmodus in der Liste angeben, der die höchste Auftrittswahrscheinlichkeit hat, für eine Decodierungsvorrichtung.

**15.** Codierungsvorrichtung nach Anspruch 12, ferner **gekennzeichnet durch**

Mittel, die komplementäre Prädiktionsmodi anhand der Modi für räumliche Prädiktion der benachbarten Blöcke bereitstellen können, wenn sie benötigt werden, so dass ein komplementärer Prädiktionsmodus des momentanen Blocks anhand der komplementären Prädiktionsmodi der benachbarten Blöcke bestimmt werden kann, und

Mittel, um in Ansprechen auf den komplementären Prädiktionsmodus des momentanen Blocks den Modus für räumliche Prädiktion des momentanen Blocks anhand einer Abbildung des komplementären Prädiktionsmodus des momentanen Blocks bereitzustellen.

**16.** Verfahren zum Decodieren von Bildinformationen, die mehrere Bildblöcke enthalten, aus einem Bitstrom unter Verwendung mehrerer Modi für räumliche Prädiktion für eine Intramodus-Blockprädiktion, wobei der Modus für räumliche Prädiktion eines momentanen Blocks anhand einer Liste verfügbarer Prädiktionsmodi bestimmt wird, die für die Kombination der Modi für räumliche Prädiktion mehrerer benachbarter Blöcke des momentanen Blocks erhalten werden, wobei das Verfahren **dadurch gekennzeichnet ist, dass** es Folgendes umfasst:

Unterteilen der Prädiktionsmodi der Liste von Prädiktionsmodi, die für die Kombination von Modi für räumliche Prädiktion der mehreren benachbarten Blöcke des momentanen Blocks erhalten werden, in eine erste Gruppe und eine zweite Gruppe von Prädiktionsmodi, wobei die erste Gruppe von Prädiktionsmodi m Prädiktionsmodi besitzt und die zweite Gruppe von Prädiktionsmodi n - m Prädiktionsmodi besitzt, wobei n die Gesamtanzahl von Prädiktionsmodi der Liste von Prädiktionsmodi für die Kombination von Modi für räumliche Prädiktion der mehreren benachbarten Blöcke des momentanen Blocks ist, wobei m kleiner ist als n und wobei die Prädiktionsmodi der ersten Gruppe von Prädiktionsmodi eine höhere Auftrittswahrscheinlichkeit haben als die Prädiktionsmodi der zweiten Gruppe von Prädiktionsmodi, wobei das Verfahren **gekennzeichnet ist durch**

Decodieren von Informationen, die angeben, ob der Modus für räumliche Prädiktion des momentanen Blocks zu der ersten Gruppe oder zu der zweiten Gruppe von Prädiktionsmodi gehört, aus dem Bitstrom.

**17.** Verfahren nach Anspruch 16, ferner **dadurch gekennzeichnet, dass** die Prädiktionsmodi der ersten Gruppe von Prädiktionsmodi in Übereinstimmung mit der Auftrittswahrscheinlichkeit unter den Prädiktionsmodi der ersten Gruppe von Prädiktionsmodi geordnet wird.

**18.** Verfahren nach Anspruch 16, ferner **dadurch gekennzeichnet, dass** die Prädiktionsmodi der zweiten Gruppe von Prädiktionsmodi auf eine vorgegebene Weise, die einer Decodierungsvorrichtung bekannt ist, angeordnet werden.

**19.** Verfahren nach Anspruch 16, ferner **dadurch gekennzeichnet, dass** die decodierten Informationen auch angeben, welcher Prädiktionsmodus der ersten Prädiktionsmodi eine höchste Auftrittswahrscheinlichkeit hat, wenn der Prädiktionsmodus mit der höchsten Auftrittswahrscheinlichkeit der ersten Gruppe von Prädiktionsmodi für die Verwendung bei der Codierung und Decodierung des momentanen Blocks ausgewählt wird.

**20.** Verfahren nach Anspruch 16, ferner **dadurch gekennzeichnet, dass** eine geordnete Liste für eine Decodierungsvorrichtung bereitgestellt wird, um der Decodierungsvorrichtung zu erlauben, eine Reihenfolge der Prädiktionsmodi der zweiten Gruppe von Prädiktionsmodi anhand der geordneten Liste zu bestimmen.

21. Decodierer, der aus einem Bitstrom Bildinformationen, die mehrere Bildblöcke enthalten, unter Verwendung mehrerer Modi für räumliche Prädiktion für eine Intramodus-Blockprädiktion decodieren kann, wobei der Modus für räumliche Prädiktion eines momentanen Blocks anhand einer Liste verfügbarer Prädiktionsmodi, die für die Kombination der Modi für räumliche Prädiktion mehrerer benachbarter Blöcke des momentanen Blocks erhalten werden, bestimmt wird, wobei der Decodierer **dadurch gekennzeichnet ist, dass** die Prädiktionsmodi der Liste von Prädiktionsmodi, die für die Kombination räumlicher Prädiktionsmodi der mehreren benachbarten Blöcke des momentanen Blocks erhalten werden, in eine erste Gruppe und in eine zweite Gruppe von Prädiktionsmodi unterteilt werden, wobei die erste Gruppe von Prädiktionsmodi m Prädiktionsmodi besitzt und die zweite Gruppe von Prädiktionsmodi n - m Prädiktionsmodi besitzt, wobei m die Gesamtanzahl von Prädiktionsmodi der Liste von Prädiktionsmodi für die Kombination von Modi für räumliche Prädiktion der mehreren benachbarten Blöcke des momentanen Blocks ist, wobei m kleiner als n ist und wobei die Prädiktionsmodi der ersten Gruppe von Prädiktionsmodi eine höhere Auftrittswahrscheinlichkeit haben als die Prädiktionsmodi der zweiten Gruppe von Prädiktionsmodi, wobei der Decodierer Folgendes umfasst:

Bestimmungsmittel, um in Ansprechen auf decodierte Informationen zu bestimmen, ob der Modus für räumliche Prädiktion des momentanen Blocks zu der ersten Gruppe oder zu der zweiten Gruppe von Prädiktionsmodi gehört, und
Mittel, um den Modus für räumliche Prädiktion anhand dieser Bestimmung auszuwählen.

22. Decodierer nach Anspruch 21, ferner **dadurch gekennzeichnet, dass** die Prädiktionsmodi der ersten Gruppe von Prädiktionsmodi in Übereinstimmung mit der Auftrittswahrscheinlichkeit unter den Prädiktionsmodi der ersten Gruppe von Prädiktionsmodi geordnet sind.

23. Decodierer nach Anspruch 21, ferner **dadurch gekennzeichnet, dass** die Prädiktionsmodi der zweiten Gruppe von Prädiktionsmodi in einer vorgegebenen Weise angeordnet sind, wobei der Decodierer ferner **gekennzeichnet ist durch**
Mittel, um Informationen, die die vorgegebene Weise angeben, zu speichern.

24. Decodierer nach Anspruch 21, ferner **dadurch gekennzeichnet, dass** die Bestimmungsmittel außerdem anhand der decodierten Informationen bestimmen können, welcher der Prädiktionsmodi der ersten Gruppe von Prädiktionsmodi eine höchste Auftrittswahrscheinlichkeit hat, wenn der Prädiktionsmodus mit der höchsten Auftrittswahrscheinlichkeit der ersten Gruppe von Prädiktionsmodi für die Verwendung beim Decodieren des momentanen Blocks verwendet wird.

25. Bildcodierungssystem zum Codieren und Decodieren eines Bildes, das mehrere Bildblöcke enthält, unter Verwendung mehrerer Modi für räumliche Prädiktion für eine Intramodus-Blockprädiktion, wobei der Modus für räumliche Prädiktion eines momentanen Blocks anhand einer Liste verfügbarer Prädiktionsmodi, die für die Kombination der Prädiktionsmodi mehrerer benachbarter Blöcke des momentanen Blocks erhalten werden, bestimmt wird, wobei das Codierungssystem **dadurch gekennzeichnet ist, dass** es Folgendes umfasst:

Mittel, um die Prädiktionsmodi der Liste von Prädiktionsmodi, die für die Kombination von Modi für räumliche Prädiktion der mehreren benachbarten Blöcke des momentanen Blocks erhalten werden, in eine erste Gruppe und eine zweite Gruppe von Prädiktionsmodi zu unterteilen, wobei die erste Gruppe von Prädiktionsmodi m Prädiktionsmodi besitzt und die zweite Gruppe von Prädiktionsmodi n - m Prädiktionsmodi besitzt, wobei n die Gesamtanzahl von Prädiktionsmodi der Liste von Prädiktionsmodi für die Kombination von Modi für räumliche Prädiktion der mehreren benachbarten Blöcke des momentanen Blocks ist, wobei m kleiner als n ist und wobei die Prädiktionsmodi der ersten Gruppe von Prädiktionsmodi eine höhere Auftrittswahrscheinlichkeit haben als die Prädiktionsmodi der zweiten Gruppe von Prädiktionsmodi,
Mittel, um Informationen, die angeben, ob der Modus für räumliche Prädiktion des momentanen Blocks zu der ersten Gruppe oder zu der zweiten Gruppe von Prädiktionsmodi gehört, in einen Bitstrom zu codieren, und
Mittel, um aus dem Bitstrom die Gruppeninformationen zu decodieren, um so einer Decodierungsvorrichtung zu erlauben, den Modus für räumliche Prädiktion des momentanen Blocks anhand der decodierten Informationen zu bestimmen.

26. Bildcodierungssystem nach Anspruch 25, ferner **gekennzeichnet durch**

Mittel, um in Ansprechen auf die erste Gruppe von Prädiktionsmodi die Prädiktionsmodi der ersten Gruppe von Prädiktionsmodi in Übereinstimmung mit der Auftrittswahrscheinlichkeit unter den Prädiktionsmodi der Gruppe der ersten Gruppe von Prädiktionsmodi zu ordnen.

**27.** Bildcodierungssystem nach Anspruch 25, ferner **gekennzeichnet durch**
Mittel, um in Ansprechen auf die zweite Gruppe von Prädiktionsmodi die Prädiktionsmodi der zweiten Gruppe von Prädiktionsmodi auf eine vorgegebene Weise, die der Decodierungsvorrichtung bekannt ist, anzuordnen.

**28.** Computerprogramm für die Verwendung in einem Bildcodierungssystem zum Codieren von Informationen, die mehrere Bildblöcke enthalten, in einen Bitstrom unter Verwendung mehrerer Modi für räumliche Prädiktion für eine Intramodus-Blockprädiktion, wobei der Modus für räumliche Prädiktion eines momentanen Blocks anhand einer Liste verfügbarer Prädiktionsmodi, die für eine Kombination von Modi für räumliche Prädiktion mehrerer benachbarter Blöcke des momentanen Blocks erhalten werden, bestimmt wird, wobei das Computerprogramm Folgendes umfasst:

einen Pseudocode für die Verwendung bei der Unterteilung der Prädiktionsmodi der Liste von Prädiktionsmodi, die für die Kombination der Modi für räumliche Prädiktion der mehreren benachbarten Blöcke des momentanen Blocks erhalten werden, in eine erste Gruppe und in eine zweite Gruppe von Prädiktionsmodi, wobei die erste Gruppe von Prädiktionsmodi m Prädiktionsmodi besitzt und die zweite Gruppe von Prädiktionsmodi n - m Prädiktionsmodi besitzt, wobei n die Gesamtanzahl von Prädiktionsmodi der Liste von Prädiktionsmodi für die Kombination von Modi für die räumliche Prädiktion der mehreren benachbarten Blöcke des momentanen Blocks ist, wobei m kleiner ist als n und wobei die Prädiktionsmodi der ersten Gruppe von Prädiktionsmodi eine höhere Auftrittswahrscheinlichkeit haben als die Prädiktionsmodi der zweiten Gruppe von Prädiktionsmodi, und
einen Pseudocode für die Verwendung beim Codieren von Informationen, die angeben, ob der Modus für räumliche Prädiktion des momentanen Blocks zu der ersten Gruppe oder zu der zweiten Gruppe von Prädiktionsmodi gehört, in den Bitstrom.

**29.** Computerprogramm nach Anspruch 28, ferner **gekennzeichnet durch**
einen Pseudocode für die Verwendung beim Anordnen der Prädiktionsmodi der zweiten Gruppe von Prädiktionsmodi auf eine vorgegebene Weise, die einer Decodierungsvorrichtung bekannt ist.

## Revendications

**1.** Procédé consistant à coder dans un flux binaire des informations d'image comprenant une pluralité de blocs d'image à l'aide d'une pluralité de modes de prédiction spatiale pour une prédiction de bloc selon le mode intra, le mode de prédiction spatiale d'un bloc courant étant déterminé en fonction d'une liste de modes de prédiction disponibles obtenue pour la combinaison de modes de prédiction spatiale d'une pluralité de blocs voisins du bloc courant, ledit procédé étant **caractérisé en ce qu'**il comprend les étapes suivantes :

diviser les modes de prédiction de la liste de modes de prédiction obtenue pour la combinaison de modes de prédiction spatiale de la pluralité de blocs voisins du bloc courant en un premier groupe et un deuxième groupe de modes de prédiction, le premier groupe de modes de prédiction ayant m modes de prédiction et le deuxième groupe de modes de prédiction ayant n-m modes de prédiction, n étant le nombre total de modes de prédiction de la liste de modes de prédiction pour la combinaison de modes de prédiction spatiale de la pluralité de blocs voisins du bloc courant, m étant inférieur à n, et les modes de prédiction du premier groupe de modes de prédiction ayant une probabilité d'occurrence supérieure par rapport aux modes de prédiction du deuxième groupe de modes de prédiction, et
coder dans le flux binaire des informations indiquant si le mode de prédiction spatiale du bloc courant appartient au premier groupe ou au deuxième groupe de modes de prédiction.

**2.** Procédé selon la revendication 1, **caractérisé en outre par** :

ordonner les modes de prédiction du premier groupe de modes de prédiction selon la probabilité d'occurrence parmi les modes de prédiction du premier groupe de modes de prédiction.

**3.** Procédé selon la revendication 1, **caractérisé en outre par** :

placer les modes de prédiction du deuxième groupe de modes de prédiction d'une certaine façon prédéterminée connue d'un dispositif de décodage.

**4.** Procédé selon la revendication 1, **caractérisé en outre par** :

coder dans le flux binaire des informations indiquant quel mode de prédiction du premier groupe de modes de prédiction a une probabilité d'occurrence supérieure lorsque le mode de prédiction avec la probabilité d'occurrence supérieure du premier groupe de modes de prédiction est sélectionné pour être utilisé pour coder le bloc courant.

**5.** Procédé selon la revendication 1, **caractérisé en outre en ce qu'**une liste ordonnée de modes de prédiction est connue d'un dispositif de décodage afin que le dispositif de décodage détermine un ordre du deuxième groupe de modes de prédiction sur la base de la liste ordonnée de modes de prédiction.

**6.** Procédé selon la revendication 5, **caractérisé en outre en ce que** la liste ordonnée de modes de prédiction est associée à plusieurs groupes des modes de prédiction spatiale d'une pluralité de blocs voisins du bloc courant.

**7.** Procédé selon la revendication 1, **caractérisé en outre en ce que** les modes de prédiction de la liste de modes de prédiction obtenue pour la combinaison des modes de prédiction spatiale de la pluralité de blocs voisins du bloc courant sont représentés par une pluralité de nombres entiers différents et **en ce que** les modes de prédiction du deuxième groupe de modes de prédiction sont ordonnés selon un ordre des nombres entiers connu d'un dispositif de décodage.

**8.** Procédé selon la revendication 1, dans lequel les modes de prédiction de la liste de modes de prédiction obtenue pour la combinaison des modes de prédiction spatiale de la pluralité de blocs voisins du bloc courant sont représentés par une pluralité de nombres entiers différents, chaque nombre entier correspondant à un mode de prédiction, et les nombres entiers étant disposés dans un ordre croissant des nombres entiers pour fournir une liste ordonnée de modes de prédiction, ledit procédé comprenant les étapes suivantes :

supprimer les nombres entiers correspondant au premier groupe de modes de prédiction de la liste ordonnée pour fournir une liste ordonnée modifiée, afin de permettre à un dispositif de décodage de déterminer l'ordre du deuxième groupe de modes de prédiction en fonction de la liste ordonnée modifiée.

**9.** Procédé selon la revendication 5, dans lequel un mode de prédiction de ladite liste de modes de prédiction obtenue pour la combinaison des modes de prédiction spatiale de la pluralité de blocs voisins du bloc courant est sélectionné pour être utilisé pour coder le bloc courant, ledit procédé étant en outre **caractérisé par** :

fournir au dispositif de décodage des informations indiquant un rang du mode de prédiction sélectionné parmi les modes de prédiction du deuxième groupe de modes de prédiction si le mode de prédiction sélectionné appartient au deuxième groupe de modes de prédiction.

**10.** Procédé selon la revendication 1, **caractérisé en outre par** :

mapper les modes de prédiction spatiale des blocs voisins pour fournir des modes de prédiction complémentaires des blocs voisins, le cas échéant, afin de
déterminer un mode de prédiction complémentaire du bloc courant en fonction des modes de prédiction complémentaires des blocs voisins, et par
mapper le mode de prédiction complémentaire du bloc courant pour obtenir le mode de prédiction spatiale du bloc courant.

**11.** Procédé selon la revendication 10, **caractérisé en ce que** :

le mappage d'un mode de prédiction d'un bloc est exécuté par une fonction de réplication en miroir.

**12.** Dispositif de codage permettant de coder dans un flux binaire une image comprenant une pluralité de blocs d'image à l'aide d'une pluralité de modes de prédiction spatiale pour une prédiction de bloc selon un mode intra, le mode de prédiction spatiale d'un bloc courant étant déterminé sur la base d'une liste de modes de prédiction disponibles obtenue pour la combinaison des modes de prédiction spatiale d'une pluralité de blocs voisins du bloc courant, ledit dispositif de codage étant **caractérisé en ce qu'**il comprend :

des moyens destinés à diviser les modes de prédiction de la liste de modes de prédiction obtenue pour la combinaison de modes de prédiction spatiale de la pluralité de blocs voisins du bloc courant en un premier groupe et un deuxième groupe de modes de prédiction, le premier groupe de modes de prédiction ayant m modes de prédiction et le deuxième groupe de modes de prédiction ayant n-m modes de prédiction, n étant le nombre total de modes de prédiction de la liste de modes de prédiction pour la combinaison des modes de prédiction spatiale de la pluralité de blocs voisins du bloc courant, m étant inférieur à n, et les modes de prédiction du premier groupe de modes de prédiction ayant une probabilité d'occurrence supérieure par rapport aux modes de prédiction du deuxième groupe de modes de prédiction, et
des moyens destinés à coder dans le flux binaire des informations indiquant si le mode de prédiction spatiale du bloc courant appartient au premier groupe ou au deuxième groupe de modes de prédiction.

**13.** Dispositif de codage selon la revendication 12, **caractérisé en outre par** :

des moyens destinés à ordonner, en réponse au premier groupe de modes de prédiction, les modes de prédiction du premier groupe de modes de prédiction selon la probabilité d'occurrence parmi les modes de prédiction du premier groupe de modes de prédiction pour fournir une liste ordonnée.

**14.** Dispositif de codage selon la revendication 12, **caractérisé en outre par** :

des moyens destinés à fournir à un dispositif de décodage des informations indiquant le mode de prédiction dans la liste qui a une probabilité d'occurrence supérieure.

**15.** Dispositif de codage selon la revendication 12, **caractérisé en outre par** :

des moyens permettant de fournir des modes de prédiction complémentaires des blocs voisins, le cas échéant, sur la base des modes de prédiction spatiale des blocs voisins afin qu'un mode de prédiction complémentaire du bloc courant puisse être déterminé en fonction des modes de prédiction complémentaires des blocs voisins, et des moyens destinés à fournir, en réponse au mode de prédiction complémentaire du bloc courant, le mode de prédiction spatiale du bloc courant sur la base d'un mappage du mode de prédiction complémentaire du bloc courant.

**16.** Procédé permettant de décoder à partir d'un flux binaire des informations d'image comprenant une pluralité de blocs d'image à l'aide d'une pluralité de modes de prédiction spatiale pour une prédiction de bloc selon un mode intra, le mode de prédiction spatiale d'un bloc courant étant déterminé sur la base d'une liste de modes de prédiction disponibles obtenue pour la combinaison des modes de prédiction spatiale d'une pluralité de blocs voisins du bloc courant, ledit procédé étant **caractérisé en ce qu'**il comprend les étapes suivantes :

diviser les modes de prédiction de la liste de modes de prédiction obtenue pour la combinaison des modes de prédiction spatiale de la pluralité de blocs voisins du bloc courant en un premier groupe et un deuxième groupe de modes de prédiction, le premier groupe de modes de prédiction ayant m modes de prédiction et le deuxième groupe de modes de prédiction ayant n-m modes de prédiction, n étant le nombre total de modes de prédiction de la liste de modes de prédiction pour la combinaison de modes de prédiction spatiale de la pluralité de blocs voisins du bloc courant, m étant inférieur à n, et les modes de prédiction du premier groupe de modes de prédiction ayant une probabilité d'occurrence supérieure par rapport aux modes de prédiction du deuxième groupe de modes de prédiction, ledit procédé étant **caractérisé par** :

décoder à partir du flux binaire des informations indiquant si le mode de prédiction spatiale du bloc courant appartient au premier groupe ou au deuxième groupe des modes de prédiction.

**17.** Procédé selon la revendication 16, **caractérisé en outre en ce que** les modes de prédiction du premier groupe de modes de prédiction sont ordonnés selon la probabilité d'occurrence parmi les modes de prédiction du premier groupe de modes de prédiction.

**18.** Procédé selon la revendication 16, **caractérisé en outre en ce que** les modes de prédiction du deuxième groupe de modes de prédiction sont placés d'une certaine façon prédéterminée connue d'un dispositif de décodage.

**19.** Procédé selon la revendication 16, **caractérisé en outre en ce que** les informations décodées indiquent également quel mode de prédiction des premiers modes de prédiction a une probabilité d'occurrence supérieure lorsque le mode de prédiction avec la probabilité d'occurrence supérieure du premier groupe de modes de prédiction est sélectionné pour être utilisé pour coder et décoder le bloc courant.

20. Procédé selon la revendication 16, **caractérisé en outre en ce qu'**une liste ordonnée est fournie à un dispositif de décodage afin de permettre au dispositif de décodage de déterminer un ordre des modes de prédiction du deuxième groupe de modes de prédiction en fonction de la liste ordonnée.

21. Décodeur permettant de décoder à partir d'un flux binaire des informations d'image comprenant une pluralité de blocs d'image à l'aide d'une pluralité de modes de prédiction spatiale pour une prédiction de bloc selon un mode intra, le mode de prédiction spatiale d'un bloc courant étant déterminé en fonction d'une liste de modes de prédiction disponibles obtenue pour la combinaison des modes de prédiction spatiale d'une pluralité de blocs voisins du bloc courant, ledit décodeur étant **caractérisé en ce que** :

les modes de prédiction de la liste de modes de prédiction obtenue pour la combinaison des modes de prédiction spatiale de la pluralité de blocs voisins du bloc courant sont divisés en un premier groupe et un deuxième groupe de modes de prédiction, le premier groupe de modes de prédiction ayant m modes de prédiction et le deuxième groupe de modes de prédiction ayant n-m modes de prédiction, n étant le nombre total de modes de prédiction de la liste de modes de prédiction pour la combinaison des modes de prédiction spatiale de la pluralité de blocs voisins du bloc courant, m étant inférieur à n, et les modes de prédiction du premier groupe de modes de prédiction ayant une probabilité d'occurrence supérieure par rapport aux modes de prédiction du deuxième groupe de modes de prédiction, ledit décodeur comprenant :

des moyens destinés à déterminer, en réponse à des informations décodées, si le mode de prédiction spatiale du bloc courant appartient au premier groupe ou au deuxième groupe de modes de prédiction, et des moyens destinés à sélectionner le mode de prédiction spatiale en fonction de ladite détermination.

22. Décodeur selon la revendication 21, **caractérisé en outre en ce que** les modes de prédiction du premier groupe de modes de prédiction sont ordonnés selon la probabilité d'occurrence parmi les modes de prédiction du premier groupe de modes de prédiction.

23. Décodeur selon la revendication 21, **caractérisé en outre en ce que** les modes de prédiction du deuxième groupe de modes de prédiction sont placés d'une certaine façon prédéterminée, ledit décodeur étant en outre **caractérisé par** :

des moyens destinés à stocker des informations indiquant ladite façon prédéterminée.

24. Décodeur selon la revendication 21, **caractérisé en outre en ce que** lesdits moyens de détermination permettent également de déterminer, en fonction des informations décodées, quel mode de prédiction du premier groupe de modes de prédiction a une probabilité d'occurrence supérieure lorsque le mode de prédiction avec la probabilité d'occurrence supérieure du premier groupe de modes de prédiction est sélectionné pour être utilisé pour décoder le bloc courant.

25. Système de codage d'image permettant de coder et de décoder une image comprenant une pluralité de blocs d'image à l'aide d'une pluralité de modes de prédiction spatiale pour une prédiction de bloc selon un mode intra, le mode de prédiction spatiale d'un bloc courant étant déterminé en fonction d'une liste de modes de prédiction disponibles obtenue pour la combinaison des modes de prédiction d'une pluralité de blocs voisins du bloc courant, ledit système de codage étant **caractérisé en ce qu'**il comprend :

des moyens destinés à diviser les modes de prédiction de la liste de modes de prédiction obtenue pour la combinaison des modes de prédiction spatiale de la pluralité de blocs voisins du bloc courant en un premier groupe et un deuxième groupe de modes de prédiction, le premier groupe de modes de prédiction ayant m modes de prédiction et le deuxième groupe de modes de prédiction ayant n-m modes de prédiction, n étant le nombre total de modes de prédiction de la liste de modes de prédiction pour la combinaison de modes de prédiction spatiale de la pluralité de blocs voisins du bloc courant, m étant inférieur à n, et les modes de prédiction du premier groupe de modes de prédiction ayant une probabilité d'occurrence supérieure par rapport aux modes de prédiction du deuxième groupe de modes de prédiction, des moyens destinés à coder dans un flux binaire des informations de groupe indiquant si le mode de prédiction spatiale du bloc courant appartient au premier groupe ou au deuxième groupe de modes de prédiction, et

des moyens destinés à décoder à partir du flux binaire lesdites informations de groupe afin de permettre à un dispositif de décodage de déterminer le mode de prédiction spatiale du bloc courant en fonction desdites informations décodées.

**26.** Système de codage d'image selon la revendication 25, **caractérisé en outre par** :

des moyens destinés à ordonner, en réponse au premier groupe de modes de prédiction, les modes de prédiction du premier groupe de modes de prédiction selon la probabilité d'occurrence parmi les modes de prédiction du premier groupe de modes de prédiction.

**27.** Système de codage d'image selon la revendication 25, **caractérisé en outre par** :

des moyens destinés à placer, en réponse au deuxième groupe de modes de prédiction, les modes de prédiction du deuxième groupe de modes de prédiction d'une certaine façon prédéterminée connue du dispositif de décodage.

**28.** Programme informatique destiné à être utilisé dans un système de codage d'image afin de coder dans un flux binaire des informations d'image comprenant une pluralité de blocs d'image à l'aide d'une pluralité de modes de prédiction spatiale pour une prédiction de bloc selon un mode intra, le mode de prédiction spatiale d'un bloc courant étant déterminé en fonction d'une liste de modes de prédiction disponibles qui est obtenue pour une combinaison de modes de prédiction spatiale d'une pluralité de blocs voisins du bloc, ledit programme informatique comprenant :

un pseudo code destiné à être utilisé pour diviser les modes de prédiction de la liste de modes de prédiction obtenue pour la combinaison des modes de prédiction spatiale de la pluralité de blocs voisins du bloc courant en un premier groupe et un deuxième groupe de modes de prédiction, le premier groupe de modes de prédiction ayant m modes de prédiction et le deuxième groupe de modes de prédiction ayant n-m modes de prédiction, n étant le nombre total de modes de prédiction de la liste de modes de prédiction pour la combinaison de modes de prédiction spatiale de la pluralité de blocs voisins du bloc courant, m étant inférieur à n, et les modes de prédiction du premier groupe de modes de prédiction ayant une probabilité d'occurrence supérieure par rapport aux modes de prédiction du deuxième groupe de modes de prédiction, et
un pseudo code destiné à être utilisé pour coder dans le flux binaire des informations indiquant si le mode de prédiction spatiale du bloc courant appartient au premier groupe ou au deuxième groupe de modes de prédiction.

**29.** Programme informatique selon la revendication 28, **caractérisé en outre par** :

un pseudo code destiné à être utilisé pour placer les modes de prédiction du deuxième groupe de modes de prédiction d'une certaine façon prédéterminée connue d'un dispositif de décodage.

FIG. 1

Q A B C D E F G H

I   a  b  c  d
J   e  f  g  h
K   i  j  k  l
L   m  n  o  p
M
N
O
P

FIG. 2

FIG. 3

(a)

"flip" line

(b)

"flip" line

FIG. 4

(a)                          (b)

# FIG. 5

receiving
encoded
image
blocks

110

100

120

is prediction mode
of current block obtainable from
that of neighbors without
mapping?

yes

no

130

mapping prediction
mode of neighboring
blocks into mirrored mode

140

determining the mirrored
prediction mode of the
current block

determining the
prediction mode of
the current block

132

150

mapping the mirrored
prediction mode of the
current block to a
prediction mode

# FIG. 6

FIG. 7

FIG. 8

EP 1 512 115 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0154416 A1, Vahteri

### Non-patent literature cited in the description

- VCEG-N54. ITU - Telecommunication Standardization Sector of Video Coding Expert Group (VCEG, September 2001

- JVT-B118r2. Joint Video Team of ISO/IEC MPEG and ITU-T VCEG, March 2002